(19) Europäisches Patentamt
European Patent Office
Office européen des brevets

(11) **EP 3 438 313 A1**

(12) **EUROPEAN PATENT APPLICATION**
published in accordance with Art. 153(4) EPC

(43) Date of publication:
**06.02.2019 Bulletin 2019/06**

(51) Int Cl.:
***C22C 38/00*** (2006.01)        ***C21D 9/46*** (2006.01)
***C22C 38/54*** (2006.01)

(21) Application number: **17775148.4**

(22) Date of filing: **28.03.2017**

(86) International application number:
**PCT/JP2017/012762**

(87) International publication number:
**WO 2017/170611 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.03.2016 JP 2016067079**

(71) Applicant: **Nisshin Steel Co., Ltd.**
**Chiyoda-ku, Tokyo 100-8366 (JP)**

(72) Inventors:
• **YAKUSHIJIN Yutaka**
**Tokyo 100-8366 (JP)**
• **HIRONAKA Akira**
**Tokyo 100-8366 (JP)**
• **IMAKAWA Kazunari**
**Tokyo 100-8366 (JP)**

(74) Representative: **Wagner & Geyer Partnerschaft**
**Patent- und Rechtsanwälte**
**Gewürzmühlstrasse 5**
**80538 München (DE)**

(54) **NB-CONTAINING FERRITIC STAINLESS STEEL SHEET AND MANUFACTURING METHOD THEREFOR**

(57)      [Problem] To enhance simultaneously an r value and ridging resistance of a Nb-containing ferritic stainless steel sheet. [Solution] A ferritic stainless steel raw material steel sheet for annealing and cold rolling, having a chemical composition containing, in terms of percentage by mass, from 0.004 to 0.030% of C, 1.50% or less of Si, 1.50% or less of Mn, 0.040% or less of P, 0.010% or less of S, from 12.0 to 25.0% of Cr, from 0.005 to 0.025% of N, from 0.20 to 0.80% of Nb, 0.10% or less of Al, from 0 to 3.0% of Mo, from 0 to 2.0% of Cu, from 0 to 2.0% of Ni, from 0 to 0.30% of Ti, from 0 to 0.0030% of B, and the balance of Fe, with unavoidable impurities, and having an existing amount of a Nb-containing precipitate of 0.20% by mass or more is provided. The raw material steel sheet is subjected to annealing at a temperature of from 900 to 1,100ºC, and then subjected to cold rolling and finish annealing.

[Fig.1]

(a) Extraction at 1,230℃

(b) Extraction at 1,100℃

EP 3 438 313 A1

**Description**

Technical Field

The present invention relates to a hot-rolled steel sheet of a Nb-containing ferritic stainless steel, and a manufacturing method for the same. The invention also relates to a manufacturing method for a cold-rolled and annealed steel sheet using the hot-rolled steel sheet as a raw material steel sheet.

Background Art

A Nb-containing ferritic stainless steel has good workability due to C and N fixed therein, and is useful for various purposes including kitchen members, home appliance members, building members, and the like. A Nb-containing ferritic stainless steel is also useful for various purposes of heat resistant materials, such as an automobile exhaust gas path member, due to the excellent high temperature strength thereof. Associated with the progress in complication of the shape of the members in recent years, the Nb-containing ferritic stainless steel is being demanded to have excellent workability for applying to various types of press working. It is significantly effective that a steel sheet applied to severe press working has a large plastic strain ratio r as a characteristic feature thereof.

Various attempts have been made for improving the r value of the Nb-containing ferritic stainless steel sheet. For example, PTL 1 described a method of subjecting a raw material having a recrystallization ratio of from 10 to 90% to cold rolling and annealing to make the total precipitates of the product steel sheet of from 0.05 to 0.60%. PTL 2 describes a method of subjecting a hot-rolled sheet to cold rolling with a large diameter roll with omission of annealing, so as to control to a particular texture. PTL 3 describes a method of subjecting a hot-rolled sheet obtained through hot rolling at an extraction temperature of 1,200ºC or more and a coiling temperature of 500ºC or less to annealing to provide a steel sheet having an unrecrystallized structure in the center portion in the thickness direction of the sheet, and then subjecting the steel sheet to cold rolling and annealing to provide a texture having a large amount of crystals with a {111} crystallographic orientation.

A cold worked member of a ferritic stainless steel sheet may have surface unevenness called ridging occurring thereon in some cases, which often becomes a problem. In recent years, a steel sheet for an automobile exhaust gas path member is also demanded to have improved ridging resistance. It is difficult to improve the ridging resistance by the ordinary techniques for improving the r value represented by PTLs 1 to 3 described above.

PTL 4 describes an improving technique of ridging resistance that is effective also for a Nb-containing ferritic stainless steel sheet. The technique includes hot rolling in an ordinary method, and then annealing for the hot-rolled sheet by a special two-stage method combining preliminary annealing for a short period of time and main annealing for one hour or more. However, the technique is difficult to improve the r value.

PTL 5 describes a technique of improving spinning workability by a process of hot-rolling a cast slab heated to a temperature of from 1,000 to 1,200ºC. In the technique, Ti is added in a slight amount in combination to a Nb-added steel to suppress the size and the density of the composite precipitate mainly containing TiN, and thereby the workability and the toughness due to TiN are improved (paragraph 0015). The literature describes that it is important that the average cooling rate in the temperature range, in which TiN becomes coarse on casting, is 5ºC per second or more (paragraph 0060). However, the literature does not teach a method for improving the r value or the ridging resistance of a Nb-containing ferritic stainless steel sheet.

Citation List

Patent Literatures

PTL 1: JP-A-2005-298854
PTL 2: JP-A-2006-233278
PTL 3: JP-A-2013-209726
PTL 4: JP-A-2006-328525
PTL 5: JP-A-2010-235995

Summary of Invention

Technical Problem

An object of the invention is to enhance simultaneously an r value and ridging resistance of a Nb-containing ferritic stainless steel sheet.

Solution to Problem

As a result of the detailed studies, the present inventors have found that for achieving the aforementioned object, it is significantly effective that a Nb-containing precipitate formed in a cast slab is allowed to remain in a hot-rolled steel sheet in a large amount. When the heating temperature of the slab before hot rolling is 1,150°C or less, at which the Nb-containing precipitate readily remains without forming solid solution, the Nb-containing precipitate can be allowed to remain in the hot-rolled steel sheet in such an amount that is substantially equivalent to that in the cast slab.

When the steel sheet having a large amount of the Nb-containing precipitate dispersed therein is subjected to cold rolling and annealing, a pinning effect is exhibited by the precipitate, thereby providing a texture having a large amount of crystals with a {111} crystallographic orientation, which is advantageous for the enhancement of the r value.

The hot-rolled steel sheet having a large amount of the Nb-containing precipitate remaining therein is in such a state that the strain is concentrated around the precipitate over the substantially entire region inside the steel sheet. The concentrated strain contributes to the formation of recrystallization nuclei in every sites inside the steel sheet in the annealing for the hot-rolled sheet, and recrystallized grains are formed over the steel sheet. When the recrystallized grains grow, a fine random recrystallized structure is formed, thereby providing a hot-rolled and annealed steel sheet that is suppressed in formation of colonies (crystal grain groups having approximate crystallographic orientation). When the steel sheet is subjected to cold rolling and annealing, a recrystallized texture that is significantly less influenced by the colonies is obtained, and the ridging resistance is enhanced.

The invention has been completed based on the aforementioned knowledge.

The invention provides a ferritic stainless steel raw material steel sheet for annealing and cold rolling, having a chemical composition containing, in terms of percentage by mass, from 0.004 to 0.030% of C, 1.50% or less of Si, 1.50% or less of Mn, 0.040% or less of P, 0.010% or less of S, from 12.0 to 25.0% of Cr, from 0.005 to 0.025% of N, from 0.20 to 0.80% of Nb, 0.10% or less of Al, from 0 to 3.0% of Mo, from 0 to 2.0% of Cu, from 0 to 2.0% of Ni, from 0 to 0.30% of Ti, from 0 to 0.0030% of B, and the balance of Fe, with unavoidable impurities, and having an existing amount of a Nb-containing precipitate of 0.20% by mass or more.

The raw material steel sheet may have a sheet thickness, for example, of from 3.0 to 6.0 mm. The "ferritic stainless steel raw material steel sheet for annealing and cold rolling" means a stainless steel sheet interim product that is to be subjected to annealing in the subsequent step and then to cold rolling in the step of applying heat history or process history. Representative examples thereof include a hot-rolled steel sheet, i.e., a steel sheet in an untouched state after hot rolling (so-called as hot). Before the cold rolling, a descaling step, such as acid pickling, is generally performed.

The Nb-containing precipitate is a precipitate phase having Nb as a constitutional element, and corresponds to a carbide, a nitride, a carbonitride, and an intermetallic compound (such as a Laves phase) of Nb. Whether or not the precipitate phase is the Nb-containing precipitate can be confirmed by such an analysis method as EDX (energy dispersive fluorescent X-ray analysis) and the like. The existing amount of the Nb-containing precipitate in the steel sheet can be obtained by an electrolytic extraction method in the following manner.

Method for obtaining Existing Amount of Nb-containing Precipitate

In a non-aqueous electrolytic solution containing 10% by mass of acetylacetone, 1% by mass of tetramethylammonium chloride, and 89% by mass of methyl alcohol, a potential of from -100 mV to 400 mV is applied to a specimen having a known mass collected from the steel sheet with respect to a saturated calomel electrode (SCE), the matrix (metal matrix) of the specimen is completely dissolved, then the liquid containing undissolved matters is filtered off with a Micropore filter having a pore diameter of 0.2 $\mu$m, and the solid content remaining on the filter is collected as an extraction residue. The mass ratio of the extraction residue with respect to the mass of the specimen having been dissolved is designated as the existing amount (% by mass) of the Nb-containing precipitate.

For a steel having the aforementioned chemical composition, the extraction residue obtained in the aforementioned manner can be substantially a residue formed of a Nb-containing precipitate. Therefore, the mass ratio of the extraction residue collected by the electrolytic extraction method described later is defined as the existing amount of the Nb-containing precipitate.

The Nb-containing precipitate preferably has an average particle diameter of from 2.0 to 10.0 $\mu$m in terms of

circle equivalent diameter. A circle equivalent diameter of a precipitate is the diameter of the circle having an area that is equal to the area of the precipitate particle measured on an observation image plane. The average particle diameter can be obtained in the following manner.

Method for Obtaining Average Particle Diameter of Nb-containing Precipitate

The cross sectional surface (L cross sectional surface) of the steel sheet that is in parallel to the rolling direction and the thickness direction thereof is observed with SEM, all the Nb-containing precipitate particles observed in the observation view field except for particles having a circle equivalent diameter of less than 0.10 $\mu$m and particles having a part thereof protruding outside the observation view field are measured for circle equivalent diameter ($\mu$m), and a value obtained by dividing the sum of the circle equivalent diameters of the measured particles by the total number of the measured particles is designated as the average particle diameter ($\mu$m) of the Nb-containing precipitate. The total number of the measured particles is 100 or more with plural observation view fields that are randomly selected and do not overlap each other. A circle equivalent diameter of a particle can be calculated from the area of the particle obtained through image processing of the SEM micrograph with an image processing software.

The ferritic stainless steel raw material steel sheet for annealing and cold rolling can be produced by a method containing hot-rolling a cast piece, such as a continuous cast slab, including heating the cast piece to a temperature of from 1,000 to 1,150$\underline{o}$C, and then extracting.

The invention also provides, as a ferritic stainless steel sheet improved in r value and ridging resistance, a ferritic stainless steel cold-rolled and annealed steel sheet having the aforementioned chemical composition, having an existing amount of a Nb-containing precipitate of 0.19% by mass or more, and having a waviness height W defined by the following item (A) of 2.0 $\mu$m or less. The cold-rolled and annealed steel sheet may have a sheet thickness, for example, of from 1.0 to 2.5 mm.

(A) A tensile test piece of JIS No. 5 is collected from the steel sheet with the longitudinal direction of the test piece being directed to the rolling direction of the steel sheet; a tensile strain is applied to the tensile test piece until an elongation ratio of a parallel portion of the test piece reaches 20%; then the tensile strain is removed to provide a test piece; a surface profile of the test piece in a center portion in the longitudinal direction is measured in the transverse direction (i.e., the direction perpendicular to the rolling direction); a waviness curve having a wavelength component of from 0.5 to 8.0 mm is determined according to JIS B0601:2013 with cutoff values $\lambda$f of 8.0 mm and $\lambda$c of 0.5 mm; and an arithmetic average waviness Wa ($\mu$m) is obtained from the waviness curve, and is designated as the waviness height W.

The ferritic stainless steel sheet improved in r value and ridging resistance can be produced by the following production method.

A method for producing a ferritic stainless steel cold-rolled and annealed steel sheet, containing:

hot-rolling a cast piece of a steel having the aforementioned chemical composition, including heating the cast piece to a temperature of from 1,000 to 1,150$\underline{o}$C, and then extracting, so as to provide a raw material steel sheet (hot-rolled steel sheet) having an existing amount of a Nb-containing precipitate of 0.2% by mass or more;

subjecting the raw material steel sheet to annealing (annealing for the hot-rolled sheet) at a temperature of from 900 to 1,100$\underline{o}$C; and

subjecting the steel sheet having been subjected to the annealing to cold rolling and annealing.

Advantageous Effects of Invention

According to the invention, a Nb-containing ferritic stainless steel sheet improved in r value and ridging resistance simultaneously is achieved. The steel sheet is significantly useful for providing a member that is required to have high press workability and excellent surface profile after working.

Brief Description of Drawing

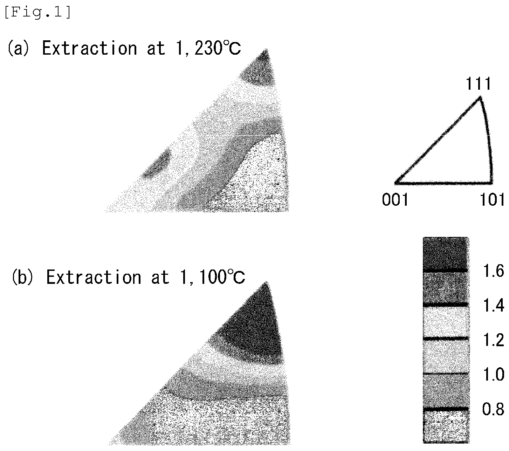

Fig. 1 is an illustration exemplifying a crystallographic orientation map in a 001 inverse pole figure of a cold-rolled and annealed steel sheet of a Nb-containing ferritic stainless steel.

Description of Embodiments

Chemical Composition

The invention targets a ferritic stainless steel containing component elements shown below. The percentages for the chemical composition of the steel sheet are percentages by mass unless otherwise indicated.

C and N form Nb carbonitride through combined addition with Nb. Nb carbonitride contributes to the formation of a texture advantageous for the enhancement of the r value. Nb carbonitride also suppresses the formation of colonies in the production process of the steel sheet, and contributes to the enhancement of the ridging resistance. For sufficiently providing these functions, the contents thereof are ensured to be 0.004% or more for C and 0.005% or more for N. Too large amounts of C and N may harden the steel, and may be a factor decreasing the toughness of the hot-rolled steel sheet. Too large amounts of C and N may also be a factor excessively decreasing the amount of dissolved Nb, which is effective for the enhancement of the high temperature strength. The contents thereof are restricted to 0.030% or less for C and 0.025% or less for N. The "Nb carbonitride" herein means a compound phase containing Nb bonded to one or both of C and N.

Si and Mn are effective as a deoxidizing agent, and in addition have a function enhancing the high temperature oxidation resistance. It is more effective that the contents thereof are ensured to be 0.05% or more for Si and 0.10% or more for Mn. These elements that are contained in large amounts may harden the steel, and may be a factor decreasing the workability and the toughness. The Si content is restricted to 1.50% or less, and is more preferably 1.00% or less. The Mn content is restricted to 1.50% or less.

P and S that are contained in large amounts may be a factor of decreasing the corrosion resistance and the like. The P content is allowed to be 0.040% or less, and the S content is allowed to be 0.010% or less. The excessive decrease of P and the excessive decrease of S may be economically disadvantageous due to the increased load in the steel making. In general, the contents thereof may be controlled in a range of from 0.005 to 0.040% for P, and may be controlled in a range of from 0.0005 to 0.010% for S.

Ni has a function suppressing the progress of corrosion, and may be added depending on necessity. In this case, it is more effective that the Ni content is ensured to be 0.01% by mass or more. However, Ni is an element stabilizing an austenite phase, and therefore excessive addition thereof to a ferritic stainless steel may form a martensite phase, and may deteriorate the workability. Excessive addition of Ni may increase the cost. The Ni content is restricted to 2.0% or less.

Cr is important for ensuring the corrosion resistance as a stainless steel. Cr is also effective for the enhancement of the high temperature oxidation resistance. For providing these functions, the Cr content is necessarily 12.0% or more. Cr that is contained in a large amount may harden the steel, and may be a factor decreasing the workability. A steel having a Cr content of 25.0% or less is targeted herein. The Cr content may also be managed to 20.0% or less.

Mo is an element effective for the enhancement of the corrosion resistance, and may be added depending on necessity. In this case, it is more effective that the Mo content is ensured to be 0.03% or more. However, a large amount thereof added may decrease the hot workability, the workability, and the toughness of the steel, and may lead to increase of the production cost. In the case where Mo is added, the content thereof is necessarily in a range of 3.0% or less.

Cu is an element effective for the enhancement of the low temperature toughness and also effective for the enhancement of the high temperature strength. Therefore, Cu may be added depending on necessity. In this case, it is more effective that the Cu content is ensured to be 0.02% or more. However, Cu that is added in a large amount may rather decrease the workability. In the case where Cu is added, the content thereof is necessarily in a range of 2.0% or less.

Nb is effective for the increase of the high temperature strength. In the invention, particularly, Nb is an important element for the enhancement of the r value and the ridging resistance through the utilization of the Nb-containing precipitate. The Nb content is necessarily 0.20% or more, and is more preferably 0.30% or more. Nb that is excessively contained may be a factor decreasing the toughness. As a result of the various investigations, the Nb content is restricted to 0.80% or less, and may be managed to 0.60% or less.

Al is effective as a deoxidizing agent. For sufficiently providing the function, it is effective to add Al to make an Al content of 0.001% or more. Al that is excessively contained may increase the hardness, and may decrease the workability and the toughness. The Al content is restricted to 0.10% or less.

B is effective for the enhancement of the secondary workability, and may be added depending on necessity. In this case, it is more effective that the content thereof is ensured to be 0.0002% or more. However, the B content that exceeds 0.0030% may impair the homogeneity of the metal structure through the formation of $Cr_2B$, and the workability may be decreased in some cases. In the case where B is added, the content thereof is in a range of 0.0030% or less.

Ti has a function fixing C and N, and is an element effective for retaining the corrosion resistance and the high temperature oxidation resistance of the steel to high levels. Therefore, Ti may be added depending on necessity. For sufficiently providing the functions, it is more effective that the Ti content is ensured to be 0.05% or more. However, Ti that is excessively contained may decrease the toughness and the workability of the steel, and may adversely affect the surface property of the product. In the case where Ti is added, the content thereof is in a range of 0.30% or less.

Existing Amount of Nb-containing Precipitate in Hot-rolled Steel Sheet

The amount of a Nb-containing precipitate existing in the ferritic stainless steel raw material steel sheet for annealing and cold rolling (i.e., the hot-rolled steel sheet) is significantly important for the enhancement of the r value and the ridging resistance of a cold-rolled and annealed steel sheet that is obtained by applying a processing heat history of annealing, cold rolling, and annealing to the raw material steel sheet. In the case where a large amount of a Nb-containing precipitate exists in the hot-rolled steel sheet, a pinning effect is exhibited by the precipitate, thereby providing a texture having a large amount of crystals with a {111} crystallographic orientation advantageous for the enhancement of the r value. Furthermore, the strain concentrated around the Nb-containing precipitate facilitates recrystallization in the annealing for the hot-rolled sheet, and the formation of colonies (crystal grain groups having approximate crystallographic orientation) is suppressed. When the hot-rolled and annealed steel sheet is subjected to cold rolling and annealing, a recrystallized texture, in which the colonies are divided, is obtained, and the ridging resistance is enhanced.

As a result of the detailed investigations, by strictly managing the existing amount of the Nb-containing precipitate in the raw material steel sheet (hot-rolled steel sheet) to 0.20% by mass or more, the r value and the ridging resistance of the final product steel sheet (i.e., the cold-rolled and annealed steel sheet) can be simultaneously improved. The upper limit of the existing amount of the Nb-containing precipitate is restricted by the contents of Nb, C, and N in the steel, and thus may not be particularly limited, and it may be suffices that the existing amount thereof is, for example, 0.50% or less.

Method for Producing Hot-rolled Steel Sheet

On hot-rolling a cast piece, such as a continuous cast slab, of a steel having the aforementioned chemical composition, it is important that the heat extraction temperature thereof is from 1,000 to 1,150ºC. When the cast piece is heated to a temperature exceeding 1,150ºC, the dissolution of the Nb-containing precipitate existing in the case piece proceeds to decrease the amount of the Nb-containing precipitate before starting the hot rolling. As a result, it becomes difficult to retain stably the existing amount of the Nb-containing precipitate in the hot-rolled steel sheet to the aforementioned prescribed amount. When the heating temperature of the cast piece is less than 1,000ºC, the influence of the cast structure largely remains in the metal structure after hot rolling, and colonies tend to form. The retention time of heating to a temperature of from 1,000 to 1,150ºC (i.e., the period of time where the temperature of the material is in a range of from 1,000 to 1,150ºC) may be, for example, from 30 to 200 minutes. Other than the regulation of the heat extraction temperature of the cast piece as described above, hot rolling conditions for an ordinary Nb-containing stainless steel sheet may be used. For example, the temperatures in the respective passes of the hot rolling may be from 650 to 1,000ºC, and the winding temperature may be from 300 to 650ºC. The hot-rolled steel sheet having a sheet thickness, for example, of from 3.0 to 6.0 mm is produced in the aforementioned manner, and the hot-rolled steel sheet is used as a ferritic stainless steel raw material steel sheet for annealing and cold rolling. By subjecting the cast piece controlled to have the aforementioned chemical composition to the hot rolling, a hot-rolled steel sheet having a Nb-containing precipitate having an average particle diameter of from 2.0 to 10.0 $\mu$m in terms of circle equivalent diameter can be obtained

Method for Producing Cold-rolled and Annealed Steel Sheet

The aforementioned raw material steel sheet (hot-rolled steel sheet) is subjected to annealing for the hot-rolled sheet at a temperature of from 900 to 1,100ºC. When the annealing temperature is less than 900ºC, the worked (rolled) structure may remain to form an unrecrystallized structure extending in the rolling direction. In this case, the improvement of the ridging resistance may be insufficient. At a higher temperature exceeding 1,100ºC, the Nb-containing precipitate remaining in a large amount may partly dissolved, and the recrystallized texture advantageous for the enhancement of the r value is difficult to obtain in the subsequent step. The annealing for the hot-rolled sheet may be performed with an ordinary continuous annealing equipment. In this case, the annealing time may be, for example, from 0 to 30 seconds in terms of soaking time (i.e., a period of time where the temperature of the material is retained at the prescribed annealing temperature).

An oxidized scale is removed by acid pickling or the like from the surface of the steel sheet after completing the annealing for the hot-rolled sheet, which is then subjected to cold rolling. It may be suffices that the cold rolling reduction ratio is ensured to be a reduction ratio capable of causing recrystallization in the finish annealing as the next step. For example, a cold rolling reduction ratio of 50% or more may be effective. The upper limit of the cold rolling reduction ratio is restricted by the capability of the equipment, and may be generally set in a range of 90% or less. The sheet thickness after the cold rolling may be, for example, from 1.0 to 2.5 mm.

After the cold rolling, finish annealing is performed. The annealing may be performed under ordinary conditions. For example, the conditions may be set in ranges of a temperature of from 1,000 to 1,100ºC and a soaking time of from 0 to 30 seconds. According to the aforementioned procedures, a cold-rolled and annealed steel sheet that is improved in both r value and ridging resistance can be obtained.

Existing Amount of Nb-containing Precipitate in Cold-rolled and Annealed Steel Sheet

In the cold-rolled and annealed steel sheet obtained in the aforementioned procedures, the Nb-containing precipitate having existed in the hot-rolled steel sheet exists in a large amount even after subjecting to the cold rolling and the finish annealing. As a result of the various investigations, in the cold-rolled and annealed steel sheet of the Nb-containing steel having the aforementioned chemical composition, the existing amount of the Nb-containing precipitate is significantly effectively 0.19% by mass or more for the improvement of the r value, and is more preferably 0.20% by mass or more. The upper limit of the Nb-containing precipitate in the cold-rolled and annealed steel sheet is restricted by the contents of Nb, C, and N in the steel as similar to the case of the hot-rolled steel sheet, and thus may not be particularly limited, and it may be suffices that the existing amount thereof is, for example, 0.50% or less.

Ridging Resistance of Cold-rolled and Annealed Steel Sheet

The ridging resistance can be evaluated by the waviness height W defined by the aforementioned item (A). A waviness height W of 2.0 $\mu$m or less can be judged to have excellent ridging resistance as a cold-rolled and annealed steel sheet of the Nb-containing steel having the aforementioned chemical composition.

Fig. 1 exemplifies a crystallographic orientation map in a 001 inverse pole figure of a cold-rolled and annealed steel sheet having a sheet thickness of 2.0 mm produced with a cast piece of a Nb-containing ferritic stainless steel having a Nb-content of 0.40% through a process including hot rolling, annealing for the hot-rolled sheet, cold rolling, and finish annealing. The orientation map is obtained for the plane (Z plane) perpendicular to the sheet thickness direction based on data of the crystallographic orientation distribution measured for the cross section (L cross section) in parallel to the rolling direction and the sheet thickness direction by EBSD (electron backscatter diffraction). The distribution of the orientation density with respect to the orientation density in the random crystallographic orientation as 1 is color-coded. Fig. 1(a) shows an ordinary material with a heat extraction temperature of a cast piece before hot rolling of 1,230°C, and Fig. 1(b) shows the material of the invention with a heat extraction temperature thereof of 1,100ºC. The other conditions than the heat extraction temperature of a cast piece are common to both the cases. The figure is obtained by converting the original color image to a gray scale image. It is understood from the figure that the ratio of the orientation in the {111} plane is significantly increased in Fig. 1(b) where the heat extraction temperature of a cast piece before hot rolling is lowered. The crystallographic orientation is effective for the enhancement of the r value.

Examples

Steels having the chemical compositions shown in Table 1 were made in an ordinary method to provide cast pieces (continuous cast slabs). The cast pieces each were extracted at the cast piece heating temperature shown in Table 2 for 120 minutes, and then was hot-rolled to provide a hot-rolled steel sheet having a sheet thickness of 4.5 mm. The rolling temperature of the final pass of the hot rolling was in a range of from 650 to 700ºC, and the winding temperature was in a range of from 500 to 650ºC.

Table 1

| Steel | Chemical Composition | | | | | | | | | | | | | |
|-------|-------|------|------|-------|-------|------|-------|------|------|-------|------|------|-------|--------|
|       | C | Si | Mn | P | S | Ni | Cr | Mo | Cu | N | Nb | Ti | Al | B |
| A | 0.008 | 0.27 | 0.21 | 0.032 | 0.001 | 0.15 | 19.82 | 0.15 | 0.49 | 0.019 | 0.46 | - | 0.010 | - |
| B | 0.009 | 0.31 | 1.02 | 0.027 | 0.003 | 0.12 | 18.30 | 1.98 | 0.18 | 0.013 | 0.62 | - | 0.006 | - |
| C | 0.007 | 0.90 | 1.12 | 0.033 | 0.001 | - | 13.86 | - | - | 0.007 | 0.38 | - | 0.005 | - |
| D | 0.005 | 0.08 | 0.20 | 0.019 | 0.002 | 0.14 | 16.95 | 0.07 | 1.39 | 0.009 | 0.54 | 0.15 | 0.038 | 0.0005 |
| E | 0.007 | 0.18 | 0.18 | 0.030 | 0.001 | 0.49 | 24.02 | 0.53 | - | 0.014 | 0.22 | 0.26 | 0.089 | - |

A specimen was collected from each of the hot-rolled steel sheets, and the existing amount of a Nb-containing precipitate was obtained by the electrolytic extraction method according to "Method for Obtaining Existing Amount of Nb-containing Precipitate" described above. The cross sectional surface (L cross sectional surface) of each of the hot-rolled steel sheets in parallel to the rolling direction and the thickness direction thereof was observed with SEM, S-4000, produced by Hitachi, Ltd., and the average particle diameter of the Nb-containing precipitate was obtained according to "Method for Obtaining Average Particle Diameter of Nb-containing Precipitate" described above.

A cold-rolled and annealed steel sheet was produced with the aforementioned hot-rolled steel sheet as a raw material steel sheet. The hot-rolled steel sheet was subjected to annealing for the hot-rolled sheet at the temperature shown in Table 2, and acid pickling in a continuous annealing and acid pickling line. The annealing time was in a range of from 0 to 30 seconds in terms of soaking time. The resulting hot-rolled and annealed steel sheet (sheet thickness: 4.5 mm) was subjected to cold rolling, and thereafter was subjected to finish annealing at a temperature of from 1,000 to 1,100ºC for a soaking time of from 0 to 30 seconds, and acid pickling, in the continuous annealing and acid pickling line, so as to provide a cold-rolled and annealed steel sheet having a sheet thickness of 2 mm. A specimen was collected from each of the cold-rolled and annealed steel sheets, and measured for the r value, the waviness height, the existing amount of the Nb-containing precipitate, and the change in hardness $\Delta$HV before and after the high temperature treatment. The existing amount of the Nb-containing precipitate was measured by the electrolytic extraction method according to the procedure described above, and the results are shown in Table 2. The other values were measured by the following methods.

r Value

The r value is a value obtained by dividing the true strain in the width direction by the true strain in the thickness direction (JIS G0202:2013, No. 1182). Tensile test pieces of JIS No. 13B were collected from the cold-rolled and annealed steel sheet in the rolling direction, the 45º direction with respect to the rolling direction, and the direction perpendicular to the rolling direction, and the r value in each of the directions on applying a tensile strain of 14.4% was calculated by the following expression (1) with a number of specimens n = 3.

$$r \text{ value} = \ln(W_0/W)/\ln(t_0/t) \qquad (1)$$

In the expression, $W_0$ represents the width (mm) of the parallel portion of the test piece before the tensile test, W represents the width (mm) of the parallel portion of the test piece after the tensile test, $t_0$ represents the thickness (mm) of the parallel portion of the test piece before the tensile test, and t represents the thickness (mm) of the parallel portion of the test piece after the tensile test.

In each of the directions, the average value of the specimens n = 3 was designated as the r value of the direction (expressed by $r_0$, $r_{45}$, and $r_{90}$ respectively). These values were substituted for the following expression (2), thereby providing the average r value of the cold-rolled and annealed steel sheet.

$$\text{average r value} = (r_0 + 2r_{45} + r_{90})/4 \qquad (2)$$

With a larger average r value, the steel sheet is less likely to suffer thickness reduction in plastic formation, and thus evaluated as having good workability. Assuming the press working for an automobile exhaust gas path member with increasing complication of the shape thereof, a specimen having an average r value of 1.20 or more was evaluated as pass (good in r value), and a specimen having a value lower than that was evaluated as fail (poor in r value). The results are shown in Table 2.

Waviness Height

A test piece of JIS No. 5 (JIS Z2241:2011) was collected from the cold-rolled and annealed steel sheet with the longitudinal direction of the test piece being directed to the rolling direction of the steel sheet, and a tensile strain of 20% was applied to the test piece in the rolling direction, followed by removing the tensile strain, so as to provide a test piece. The surface profile of the test piece in the center portion was measured with a contact surface roughness meter (SURFCOM 2900DX, produced by Tokyo Seimitsu Co., Ltd.) according to the aforementioned item (A), and an arithmetic average waviness Wa was obtained based on the surface profile, and was designated as the waviness height W ($\mu$m). With a waviness height of 2.0 $\mu$m or less, the steel sheet is evaluated as having excellent ridging resistance even in working to a product with a high working degree. Accordingly, a specimen having a waviness height of 2.0 $\mu$m or less was evaluated as pass (good in ridging resistance), and a specimen having a value exceeding that was evaluated as fail (poor in ridging resistance). The results are shown in Table 2.

Table 2

| Class | No. | Steel | Cast piece heating temperature (ºC) | Hot-rolled steel sheet | | Annealing temperature of hot-rolled sheet (ºC) | Cold-rolled and annealed steel sheet | | Ridging resistance |
|---|---|---|---|---|---|---|---|---|---|
| | | | | Nb-containing precipitate | | | Existing amount of Nb-containing precipitate (% by volume) | Average r value | |
| | | | | Existing amount (% by volume) | Average particle diameter ($\mu$m) | | | | Waviness height W ($\mu$m) |
| Example of Invention | 1 | A | 1025 | 0.27 | 3.8 | 1045 | 0.25 | 1.6 | 1.7 |
| | 2 | A | 1044 | 0.26 | 3.5 | 965 | 0.25 | 1.8 | 1.5 |
| | 3 | A | 1108 | 0.25 | 3.3 | 1059 | 0.23 | 1.5 | 1.3 |
| | 4 | A | 1086 | 0.24 | 3.2 | 948 | 0.23 | 1.7 | 1.0 |
| | 5 | A | 1120 | 0.23 | 3.1 | 1037 | 0.22 | 1.3 | 1.1 |
| | 6 | A | 1143 | 0.22 | 2.6 | 971 | 0.21 | 1.5 | 0.9 |
| | 7 | B | 1098 | 0.29 | 3.2 | 1048 | 0.27 | 1.3 | 0.8 |
| | 8 | C | 1105 | 0.25 | 2.9 | 1035 | 0.24 | 1.3 | 1.2 |
| | 9 | D | 1095 | 0.28 | 4.7 | 1051 | 0.27 | 1.4 | 1.3 |
| | 10 | E | 1115 | 0.21 | 2.2 | 1079 | 0.20 | 1.2 | 1.8 |
| Comparative Example | 21 | A | <u>1232</u> | <u>0.15</u> | 1.2 | 1042 | <u>0.14</u> | 1.0 | 0.7 |
| | 22 | A | <u>1289</u> | <u>0.13</u> | 0.9 | <u>876</u> | <u>0.12</u> | 1.3 | <u>5.6</u> |
| | 23 | A | 1111 | 0.23 | 2.1 | <u>830</u> | 0.22 | 1.5 | <u>4.8</u> |
| | 24 | B | <u>1223</u> | <u>0.18</u> | 1.4 | 1049 | <u>0.17</u> | 1.1 | 1.1 |
| | 25 | B | 1087 | 0.21 | 3.0 | <u>876</u> | 0.20 | 1.2 | <u>3.2</u> |
| Underlined value: outside the scope of the invention | | | | | | | | | |

In the Examples of the invention, the hot-rolled steel sheet has a sufficiently large content of the Nb-containing precipitate. The cold-rolled and annealed steel sheet obtained with the hot-rolled steel sheet as a raw material through the procedure performing the suitable annealing for the hot-rolled sheet has a large average r value and a small waviness height. Accordingly, the demands for the improvement of the r value and the ridging resistance for the Nb-containing ferritic stainless steel sheet are simultaneously achieved. The cold-rolled and annealed steel sheet contains the Nb-containing precipitate remaining in a large amount, and thus it is considered that the existing amount of the Nb-containing precipitate is retained to a high level even after subjecting to the annealing for the hot-rolled sheet, which contributes to the formation of the crystallographic orientation advantageous for the enhancement of the r value in the process of cold rolling and finish annealing.

On the other hand, in Comparative Examples Nos. 21 and 24, the amount of the Nb-containing precipitate in the hot-rolled steel sheet is small since the ordinary cast piece heating temperature is employed. Accordingly, the r value of the cold-rolled and annealed steel sheet cannot be improved. In No. 22, although the amount of the Nb-containing precipitate in the hot-rolled steel sheet is decreased due to the high cast piece heating temperature, the r value of the cold-rolled and annealed steel sheet is enhanced since the annealing temperature for the hot-rolled sheet is set relatively low. However, the ridging resistance is deteriorated. In Nos. 23 and 25, although the hot-rolled steel sheet having a sufficient content of the Nb-containing precipitate is used, the resulting cold-rolled and annealed steel sheet is deteriorated in ridging resistance due to the low annealing temperature for the hot-rolled sheet.

## Claims

1. A ferritic stainless steel raw material steel sheet for annealing and cold rolling, having a chemical composition containing, in terms of percentage by mass, from 0.004 to 0.030% of C, 1.50% or less of Si, 1.50% or less of Mn, 0.040% or less of P, 0.010% or less of S, from 12.0 to 25.0% of Cr, from 0.005 to 0.025% of N, from 0.20 to 0.80% of Nb, 0.10% or less of Al, from 0 to 3.0% of Mo, from 0 to 2.0% of Cu, from 0 to 2.0% of Ni, from 0 to 0.30% of Ti, from 0 to 0.0030% of B, and the balance of Fe, with unavoidable impurities, and having an existing amount of a Nb-containing precipitate of 0.20% by mass or more.

2. The ferritic stainless steel raw material steel sheet according to claim 1, wherein the Nb-containing precipitate has an average particle diameter of from 2.0 to 10.0 $\mu$m in terms of circle equivalent diameter.

3. A manufacturing method for the ferritic stainless steel raw material steel sheet according to claim 1 or 2, comprising hot-rolling a cast piece of a steel having a chemical composition containing, in terms of percentage by mass, from 0.004 to 0.030% of C, 1.50% or less of Si, 1.50% or less of Mn, 0.040% or less of P, 0.010% or less of S, from 12.0 to 25.0% of Cr, from 0.005 to 0.025% of N, from 0.20 to 0.80% of Nb, 0.10% or less of Al, from 0 to 3.0% of Mo, from 0 to 2.0% of Cu, from 0 to 2.0% of Ni, from 0 to 0.30% of Ti, from 0 to 0.0030% of B, and the balance of Fe, with unavoidable impurities, including heating the cast piece to a temperature of from 1,000 to 1,150$\underline{o}$C, and then extracting.

4. A ferritic stainless steel cold-rolled and annealed steel sheet having a chemical composition containing, in terms of percentage by mass, from 0.004 to 0.030% of C, 1.50% or less of Si, 1.50% or less of Mn, 0.040% or less of P, 0.010% or less of S, from 12.0 to 25.0% of Cr, from 0.005 to 0.025% of N, from 0.20 to 0.80% of Nb, 0.10% or less of Al, from 0 to 3.0% of Mo, from 0 to 2.0% of Cu, from 0 to 2.0% of Ni, from 0 to 0.30% of Ti, from 0 to 0.0030% of B, and the balance of Fe, with unavoidable impurities, having an existing amount of a Nb-containing precipitate of 0.19% by mass or more, and having a waviness height W defined by the following item (A) of 2.0 $\mu$m or less:

   (A) a tensile test piece of JIS No. 5 is collected from the steel sheet with the longitudinal direction of the test piece being directed to the rolling direction of the steel sheet; a tensile strain is applied to the tensile test piece until an elongation ratio of a parallel portion of the test piece reaches 20%; then the tensile strain is removed to provide a test piece; a surface profile of the test piece in a center portion in the longitudinal direction is measured in the transverse direction (i.e., the direction perpendicular to the rolling direction); a waviness curve having a wavelength component of from 0.5 to 8.0 mm is determined according to JIS B0601:2013 with cutoff values $\lambda$f of 8.0 mm and $\lambda$c of 0.5 mm; and an arithmetic average waviness Wa ($\mu$m) is obtained from the waviness curve, and is designated as the waviness height W.

5. The ferritic stainless steel cold-rolled and annealed steel sheet according to claim 4, wherein the cold-rolled and annealed steel sheet has a sheet thickness of from 1.0 to 2.5 mm.

6. A manufacturing method for a ferritic stainless steel cold-rolled and annealed steel sheet, comprising:

hot-rolling a cast piece of a steel having a chemical composition containing, in terms of percentage by mass, from 0.004 to 0.030% of C, 1.50% or less of Si, 1.50% or less of Mn, 0.040% or less of P, 0.010% or less of S, from 12.0 to 25.0% of Cr, from 0.005 to 0.025% of N, from 0.20 to 0.80% of Nb, 0.10% or less of Al, from 0 to 3.0% of Mo, from 0 to 2.0% of Cu, from 0 to 2.0% of Ni, from 0 to 0.30% of Ti, from 0 to 0.0030% of B, and the balance of Fe, with unavoidable impurities, including heating the cast piece to a temperature of from 1,000 to 1,150ºC, and then extracting, so as to provide a raw material steel sheet having an existing amount of a Nb-containing precipitate of 0.20% by mass or more;
subjecting the raw material steel sheet to annealing at a temperature of from 900 to 1,100ºC; and
subjecting the steel sheet having been subjected to the annealing to cold rolling and annealing.

[Fig.1]

(a) Extraction at 1,230℃

111

001          101

(b) Extraction at 1,100℃

1.6

1.4

1.2

1.0

0.8

<div align="center">

**INTERNATIONAL SEARCH REPORT**

</div>

| | International application No. |
| --- | --- |
| | PCT/JP2017/012762 |

**A. CLASSIFICATION OF SUBJECT MATTER**
*C22C38/00*(2006.01)i, *C21D9/46*(2006.01)i, *C22C38/54*(2006.01)i

According to International Patent Classification (IPC) or to both national classification and IPC

**B. FIELDS SEARCHED**

Minimum documentation searched (classification system followed by classification symbols)
C22C38/00, C21D9/46, C22C38/54

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2005-298854 A  (Nippon Steel & Sumikin Stainless Steel Corp.),<br>27 October 2005 (27.10.2005),<br>claims 1, 4; paragraphs [0014], [0025] to [0029], [0031]; tables 1, 2; fig. 2, 3<br>& US 2006/0225820 A1<br>claims 1, 4; paragraphs [0022], [0033] to [0037], [0042]; tables 1, 2; fig. 2, 3 | 1<br>2-6 |
| X<br>A | JP 2000-256749 A  (Nippon Yakin Kogyo Co., Ltd.),<br>19 September 2000 (19.09.2000),<br>paragraphs [0006], [0023], [0024], [0028], [0034]; tables 1, 2<br>(Family: none) | 1,3,6<br>2,4-5 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>19 June 2017 (19.06.17) | Date of mailing of the international search report<br>27 June 2017 (27.06.17) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/012762

C (Continuation).　DOCUMENTS CONSIDERED TO BE RELEVANT

| Category* | Citation of document, with indication, where appropriate, of the relevant passages | Relevant to claim No. |
|---|---|---|
| X<br>A | JP 58-199822 A　(Nippon Steel Corp.),<br>21 November 1983 (21.11.1983),<br>claims; page 2, upper left column, line 13 to<br>lower left column, line 12; page 3, upper left<br>column, line 1 to lower left column, line 6;<br>page 3, lower right column, line 5 to page 4,<br>upper right column, line 6; tables 1, 2<br>(Family: none) | 1,3-6<br>2 |
| A | JP 2009-35813 A　(JFE Steel Corp.),<br>19 February 2009 (19.02.2009),<br>claim 1; paragraphs [0006], [0012], [0039],<br>[0045], [0046]; tables 1 to 4; fig. 1<br>& EP 2163658 A1<br>claim 1; paragraphs [0009] to [0011], [0017],<br>[0018], [0074], [0085] to [0087]; tables 1 to<br>4; fig. 1 | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005298854 A
- JP 2006233278 A
- JP 2013209726 A
- JP 2006328525 A
- JP 2010235995 A